# EUROPEAN PATENT SPECIFICATION

(11) **EP 0 588 918 B1**
(45) Date of publication and mention of the grant of the patent: **16.10.1996**
(21) Application number: 92912975.7
(22) Date of filing: 12.06.1992
(51) Int. Cl.: B43L 1/12, G11B 23/40

(54) **A LABEL**
ETIKETT
ETIQUETTE

(30) Priority: 14.06.1991 NZ 238561; 30.08.1991 NZ 239618
(43) Date of publication of application: 30.03.1994
(73) Proprietor: RE-MARK-IT LIMITED, Kilbirnie, Wellington (NZ)
(72) Inventor: BILBIE, Clive James Frank, Wellington 6001 (NZ); CORKILL, Bruce David, Wellington 6001 (NZ); TIPPER, Roy Beverley, Wellington 6001 (NZ)
(74) Representative: Tunstall, Christopher Stephen
(86) International application number: GB9201057
(87) International publication number: WO9222434

(56) References cited:
- WO-A-89/12556
- US-A- 4 763 929

## Description

The invention comprises a label.

Video cassettes, by way of example, are often used for recording an audio-visual item and then that item is erased and another item is recorded, or another item is simply over recorded, at a later time. For example, a video cassette may be used to record a television program to be viewed later, or to film an event in a domestic or commercial situation, which is subsequently erased after viewing or is transferred to another tape. While many video cassettes are sold in a prerecorded condition, with a movie for example intended to be permanently retained on the cassette, by far the greater majority of video cassettes are sold in blank form.

When a video cassette has been used to record from television or to film an event, it is typically labelled with an adhesive paper label applied to the back of the cassette on which is written details identifying the program or event. Blank video cassettes are typically sold with two and sometimes more such adhesive labels of a shape to fit on the back of the cassette. When the cassette is used a second time and another item is over recorded, the second label supplied with the blank cassette when new can be written on and stuck over the first label. By the time the cassette is used to record a second item however, the second adhesive label that came with the video cassette when new may be lost. If the second label cannot be found, as it is often misplaced after purchase, the details on the label identifying the first item are crossed out or overwritten.

The conventionally employed adhesive label system as described is less than satisfactory. Because of the inconvenience and because many tapes are reused again and again, in many cases the tapes are not labelled in the first place.

The use of "magic slate" type labelling systems for video cassettes has been proposed previously, but such previous proposals suffer from substantial disadvantages. US patent 4,763,929 and UK patent application 2,132,979A relate to "magic slate" type labelling devices intended specifically for video cassettes. The device of US patent 4,763,929 uses either a slidable cursor which moves between a wax layer and a paper foil layer of the labelling device to separate the two for erasing the label, or a hinged frame carrying the paper foil layer which is moved to erase the label. The device of UK patent application 2,132,979A similarly uses a slidable cursor. While it is said that both of these devices can be applied to the "spine" of a video cassette, in practice either the devices could be too large to enable the cassette to then be inserted into a video recorder/player and used without interference with the mechanism of the video cassette recorder/player, or alternatively the devices would need to be small such that the mechanical cursor or slide or hinged frame could be inconvenient to operate. It is believed likely that in practice that these devices would instead be applied to the spine of the case or box for the video cassette.

UK patent application 2,055,702A relates to a video tape cassette box including an integral "magic slate" type pad. The pad is erased by withdrawing the slidably mounted pad from a slot in the box in which the pad is mounted. The chief disadvantage with systems where the video cassette box rather than the video cassette itself is labelled, is that the video cassette can easily be put into the wrong box; a number of video cassettes and boxes can be easily mixed up. Labelling of the box is then useless. Also, to enable a user to label video cassettes the user already has, would require the user to buy a number of new video cassette boxes for those video cassettes.

PCT patent application publication No W089/12556 relates to a "magic slate" type label intended to be adhered to the spine of a video cassette rather than the video cassette box, and which does not employ mechanically moving parts. However in this label the translucent top layer is held in position by adhesion to the wax layer and is only permanently affixed at one end of the long label. The top layer is peeled away by hand to erase the label. Such a label is not particularly robust, because with use the top layer could become torn at its juncture to the body of the label and generally the top layer is susceptible to damage, and also the label is considered to be relatively prone to accidental erasion, for example when the video cassette is being inserted into or removed from the video recorder/player by touching a part of the mechanism or a users fingers tending to dislodge the top layer relative to the wax layer of the label.

Although video cassettes have now been in common use for a decade or more, no satisfactory answer to the problem of labelling and relabelling video cassettes has been provided. While "magic slate" type labels have been proposed, known labels have significant disadvantages.

Computer discs such as floppy discs in particular present similar labelling problems. Some discs are recorded with programs which it is desired to keep permanently but many discs are used as work discs for storing data or work which is subsequently erased or modified and in many other situations floppy discs are used and reused for different purposes.

It is an object of the present invention to provide an improved or at least alternative form of label for labelling objects or items such as video cassettes and computer discs such as floppy discs in particular, folders or files, containers and any other item desired to be labelled.

In broad terms the invention comprises an erasable and rewritable label comprising a base layer of contrasting colour and and an upper sheet over the base layer and providing a smooth top surface to the label which upper sheet and base layer are sufficiently mutually adhesive under pressure applied to the label by a writing implement such as a blunt stylus on the upper sheet to cause the upper sheet and the base layer to adhere in the localised region of said pressure that the colour of the base layer is visible through the upper sheet in said localised region in contrast to the balance of the upper sheet, and to cause the upper sheet to move relative to the base layer to erase the label when a users finger or thumb is wiped across the top surface of the upper sheet from one side to the other side thereof.

Preferably the label has a contact adhesive applied to the rear surface of the label enabling the label to be stuck onto a video cassette, computer disc, folder or other object or item to be labelled. It is possible however that instead of being affixed by adhesive the label could be intended to be retained within a pocket on the spine of a folder or other object having a window through which the label is visible, for example. Details may be written on the label before it is inserted into the pocket and the label may be removed from the pocket to erase and rewrite the label. Attachment of the label by adhesive on the rear surface of the label is most preferred however. Where the label has adhesive on its rear surface the adhesive could be restickable adhesive enabling the label to be applied to, removed from, and reapplied to an object or another object one or more times.

Preferably the region of the upper sheet in which the contrasting colour is seen in use of the label comprises a window in the upper sheet (or in a top sheet over the upper sheet if the label also comprises a top sheet as will be described). Preferably the label comprises space(s) for carrying printed media such as advertising media elsewhere on the upper sheet (or top sheet).

Where the label is intended for application to the back of a video cassette the label is preferably more than four and most preferably seven times longer than it is wide, and most preferably the overall dimensions of the label are about 148mm x 20mm in particular.

Where the label is intended for application to a 3 1/2" computer floppy disc the label is preferably square or rectangular and most preferably the overall dimensions of the label are about 70 mm x 70 mm.

The upper sheet is preferably translucent to enhance the contrast between the colour of the base layer under pressure of writing and the balance of the upper sheet, and thus to enhance the visibility of written details on the label. The upper sheet may additionally or alternatively be tinted with a different colour relative to the colour of the base layer, so that the label normally appears to have the colour of the upper sheet and when written on the writing appears in the colour of the base layer, or in a colour resulting from the combination of the base layer and upper sheet colours. For example, the base layer may be coloured blue and the upper sheet toned yellow; when pressed to adhere together under localised pressure of writing the writing will appear green in contrast to the balance of the yellow upper sheet. Other such colour combinations will be apparent to those skilled in the art. The upper sheet may be optionally tinted if desired. For example, the base sheet may be a dark colour such as black and the upper sheet translucent and tinted white, so that when the upper sheet and base layer are adhered together under pressure of writing the written details will appear dark on light on the label. By incorporating a luminescent or fluorescent dye into the base layer the colour of the base layer may be luminous so that it will glow in the dark, or fluorescent. The upper sheet may also be made luminescent or fluorescent or may be lightly embossed with a pattern or logo for example.

The label may also comprise at least one further sheet over the upper sheet, as a top sheet. The top sheet may act as a protective sheet for the upper sheet and base layer. The top sheet may be clear or also slightly translucent or tinted if desired, and may carry printed or lightly embossed media instead of the upper sheet.

Suitable materials for forming the upper sheet, and optionally also the top sheet where the label has a top sheet as well as an upper sheet include polyvinylchloride film, an acetate film, a polyester film such as MYLAR, or similar materials which preferably have a glossy surface. Preferably the upper sheet is of up to 100 microns and most preferably in the range 30 to 50 microns in thickness.

Suitable materials for forming the base layer include waxes such as paraffin wax, blends of paraffin wax with other waxes, blends of other waxes, and other substances such as synthetic wax like substances having a waxy consistency, which can be applied as a thin layer and will adhere with the label upper layer.

By "adhere" in relation to the base layer and the upper sheet is meant that the two will stick together under localised pressure of writing to show the written details in contrast, with the upper sheet and base layer being able to be subsequently separated to erase the label as described.

Preferred forms of the label of the invention will now be described by way of example and without intending to be limiting as to detail, with reference to the accompanying drawings wherein:
Fig. 1 shows writing on one preferred form of label of the invention applied to a video cassette;
Figs 2 and 3 show erasure of the label of Fig. 1;
Fig. 4 shows the label of Figs 1 to 3 in cross-section;
Fig. 5 shows another preferred form of label of the invention, showing a part thereof enlarged in Fig. 5A;
Fig. 6 shows a further preferred form of label of the invention, showing a part thereof in cross-section in Fig. 6A;
Fig. 7 shows a label of the invention applied to a computer floppy disc;
Fig. 8 shows a security/visitor badge comprising a label of the invention;
Fig. 9 shows a garden plant identification stake comprising a label of the invention;
Fig. 10 shows a vehicle machinery service label comprising a label of the invention;
Fig. 11 shows a home brew batch label comprising a label of the invention;
Fig. 12 shows a produce sign comprising a label of the invention;
Fig. 13 shows a parts bin label comprising a label of the invention;
Fig. 14 shows an exposed film label in accordance with the invention;
In all of Figs 1 to 6 the forms of label illustrated are shown applied to the back of a video cassette 4, only part of which is shown.

Referring to the drawings, the label comprises a base layer 2 and an upper sheet 3. The base layer 2 in the forms shown in the drawings is carried by a backing sheet 5, but it is possible that the material of the backing sheet 5 could form the base layer, so that the base layer 2 and backing sheet 5 are one and the same.

The backing sheet 5 may comprise paper or any other suitable material such as a synthetic material, as a substrate. The base layer 2 is a coloured or toned wax or similar synthetic material which will adhere with the upper sheet 3 as indicated previously. The base layer 2 may be coated onto the backing sheet 5. The base layer may include a dye, so that the base layer is coloured for example dark blue, or alternatively any other desired colour or combination of colours in different regions. The base layer need not extend the full length of the label but may if desired extend only below and slightly beyond a window 6 in the upper sheet 3. The base layer may comprise any other suitable material than wax, which will adhere with the upper sheet 3 under localised pressure of writing but which also allows the base layer and top sheet to be subsequently separated to erase the label.

The backing sheet 5 preferably has a coating of contact adhesive on its rear surface by which the label may be stuck to an object such as the spine of a video cassette as shown, or to the spine of a folder or the like in other applications.

The upper sheet 3 is preferably translucent and may comprise a translucent plastic film, tracing paper or the like. A plastic film such as polyvinylchloride may have an additive mixed with the PVC resin before extrusion to make it translucent, or a clear plastic film may be given qualities of translucence by etching, texturing or calendaring the film and particularly the bottom surface of the film, for example. This may also assist the upper sheet to adhere with the base layer in use. The upper sheet 3 may be printed to define the window 6 in the upper sheet for example. Regions of the upper sheet other than the window 6 may be provided for carrying permanently printed media such as advertising media. In the case of a video cassette label the regions 7 may be larger than shown and the window 6 smaller. In other shapes of label the regions 7 may be of any desired size.

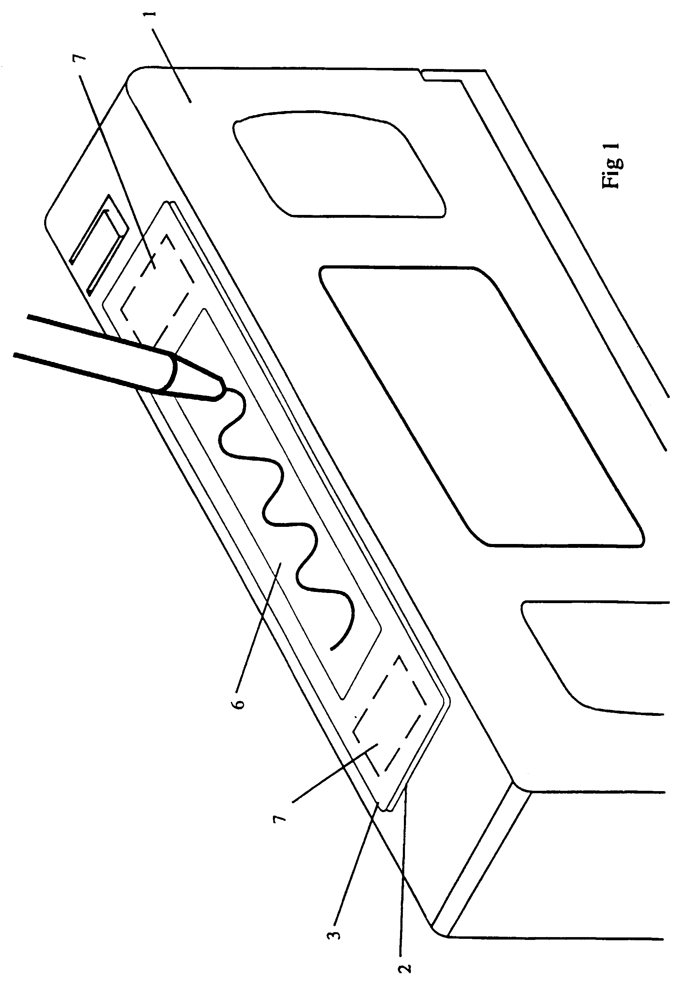

In the form of the label shown in Figs 1 to 4 the upper sheet 3 is adhered to the backing sheet 5 about the entire periphery of the upper sheet, that is along both sides and at either end of the upper sheet, by gluing, plastic welding or other suitable means during manufacture.

A protective top sheet may be provided over the upper sheet, comprising clear plastic film for example, and also having a window 6. The regions 7 for permanently printed media could then be provided on the top sheet, in which case the upper sheet 3 would then typically be an otherwise plain sheet of the translucent material. The top sheet could consist of a laminate of paper printed with advertising media and having a cutout defining the window 6, and a clear protective film on top.

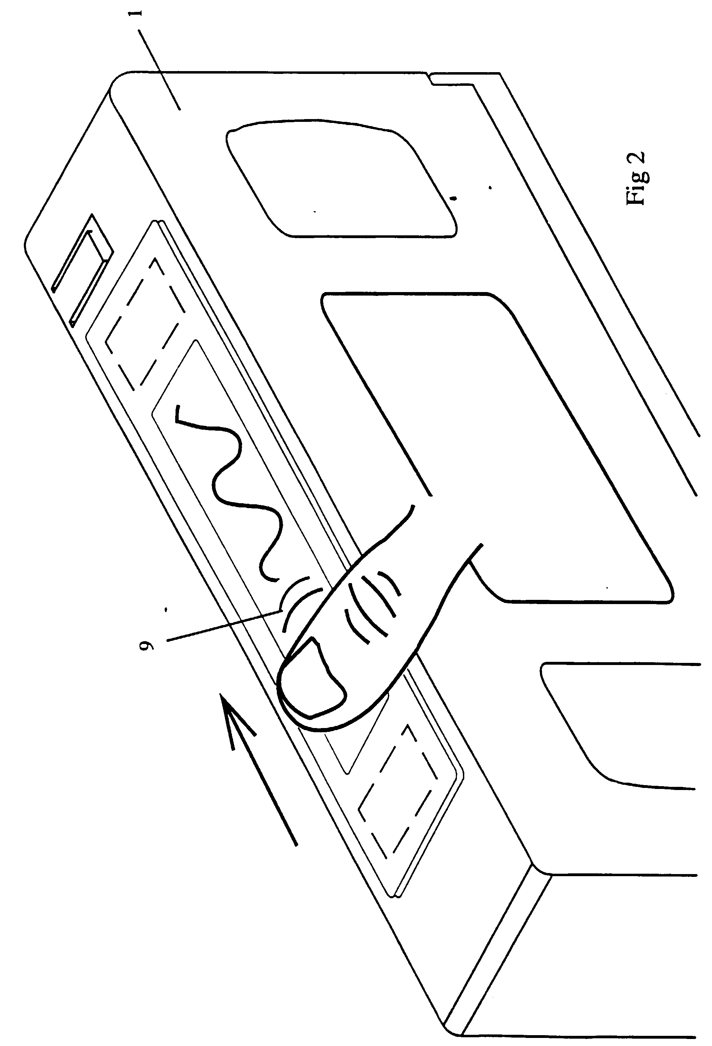

The arrangement is such that in use, as shown in Fig. 1, a blunt stylus, a pencil or pen (preferably the non-inking/marking end so as not to permanently mark the label) or any hard object such as even the corner of another video cassette or a fingernail, all of which are intended to be included within the term "writing implement" for the purposes of this specification, may be used to write identifying details on the label by pressing on the upper sheet 3 within the window 6. This will cause the upper sheet 3 to adhere to the base layer 2 where localised pressure from the writing is applied so that the colour of the base layer is then clearly visible through the translucent upper sheet 3 in the window 6, as shown in Fig. 2. The thus labelled video cassette may be used in a video player/recorder, stored or otherwise handled and the identifying details on the label will remain. The thickness of the label is small and does not interfere with the video recorder/player mechanism.

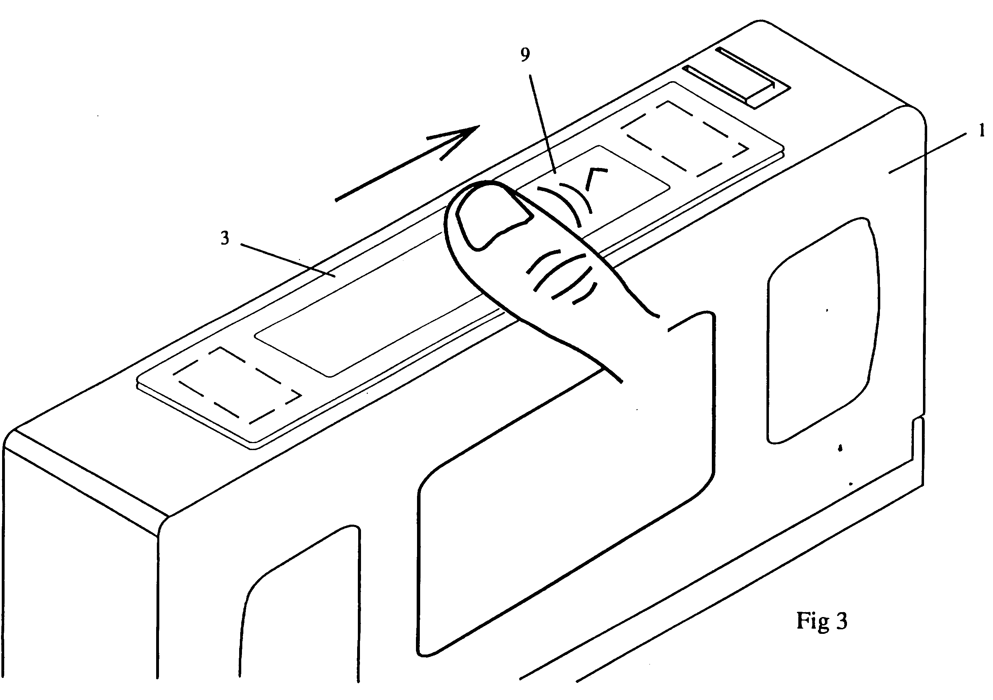

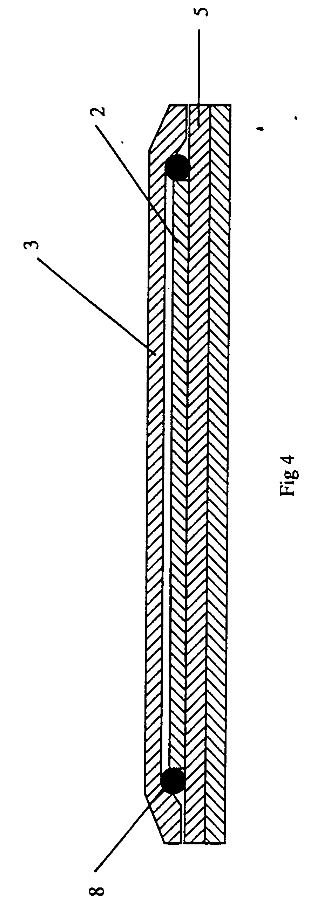

The upper sheet 3 incorporates a slight wrinkle including a slight wave or bubble. To create the wrinkle, for example a small amount of air may be contained between the upper sheet 4 and the base layer 5. This may be assisted by during manufacture providing a short rib 8 (see Fig 4), which preferably is spongy in nature, extending across the label transversely between the base layer 2 and the upper sheet 3 at one end as shown, although trapping of a small amount of air does not essentially require use of a rib or the equivalent. The rib, if employed, may be formed by a small foam member, or a bead of plastic applied during manufacture, for example. A rib may be provided at both ends of the label. The presence of the rib/small amount of air creates a slight wrinkle, wave or bubble in the upper sheet 3, or enables such a slight wrinkle to be created in use. To erase the details from the label a users finger or thumb is wiped across the label from preferably the plastic rib end of the label as shown in Figs 2 and 3, wiping a wrinkle 9 in front of the finger along the length of the label. This will separate the upper layer 3 and the base layer 2 as the wrinkle moves. Preferably in use the wrinkle is then wiped back to the rib end of the label. The label may then be rewritten on as before.

As a further alternative to use of a rib or equivalent, to enable such a slight wrinkle to be created in use the upper sheet 3 and top sheet if employed, can be secured to the backing sheet 5 only along two sides such as the two long sides of the label, but not at the ends. This assists in enabling a wrinkle to be created in use by wiping a finger over the length of the label. Also, one or more slight wrinkles including waves or bubbles may be formed in the upper sheet, and top sheet if employed, again instead of using a rib, by making the tension of the upper sheet very relaxed to give it at least one wrinkle and then fixing the upper and top sheet in position while so relaxed.

Insertion of a small amount of air or use of or mounting of the upper sheet along only two sides to create a wrinkle including a wave, bubble or the equivalent is not necessary if the upper sheet has a degree of elasticity or is mounted to provide elasticity and the level of adhesion or friction between the upper sheet and the base layer is such that the upper sheet can be wrinkled and/or slightly moved or stretched relative to the base layer by passing, repeatedly if necessary, a users finger or thumb over the label, to erase the label. Where a top sheet is also used the underside of the top sheet and top surface of the upper sheet may be suitably textured, etched, calendared or the like or coated with a friction creating material to assist in transferring stretch and/or movement to the upper sheet.

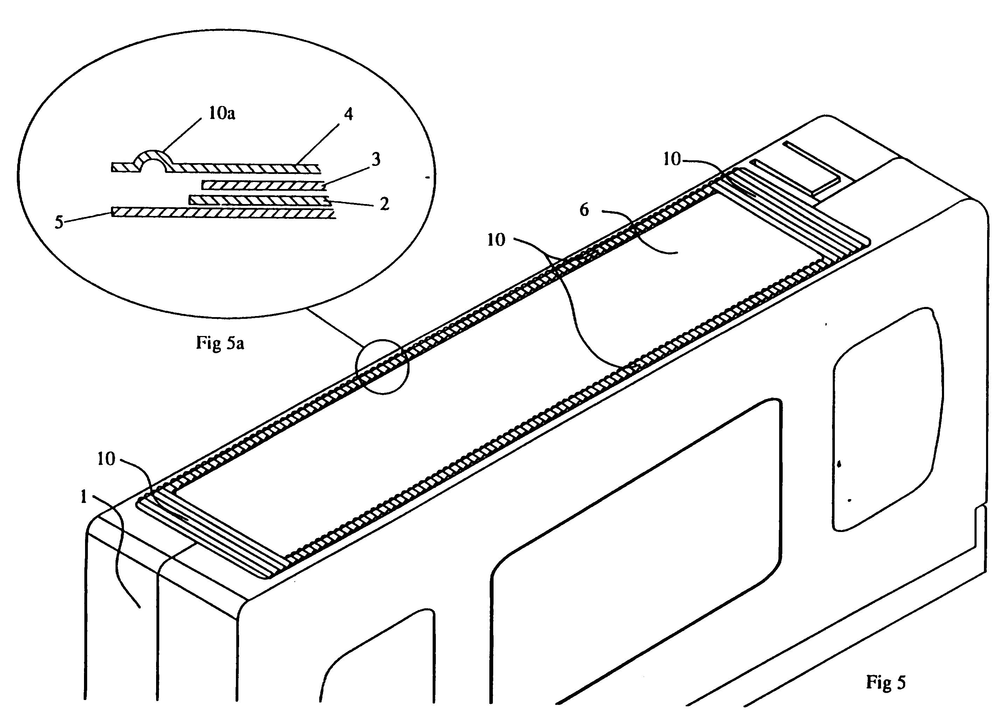

Fig. 5 shows a label which again has a base layer 2, an upper sheet 3 and also a top sheet 4. Fig. 5A shows a part of one side of the label enlarged and in cross-section. A backing sheet 5 is provided beneath the base layer which has a contact adhesive on its rear surface. The top sheet 4 has a window 6 through which in use writing on the label is visible. A series of pleats 10 are formed along the sides and at either end of the label about the window 6 as shown. A single pleat is indicated at 10a in Fig. 5A. The top sheet 4 is sealed to the backing sheet 5 at the edges of the top sheet and backing sheet, but not beneath the entire width of the pleats 10 along the long sides of the label so that the pleats are free to move somewhat. In use, the label is written on as before. To erase the label, a users finger or thumb is wiped across the window 6 of the label from one end to the other one or more times as necessary, and this wiping action will cause the pleats 10 at the ends and along the sides of the label to open slightly dragging and wrinkling the top sheet 4 and upper sheet 3 relative to the base layer 2, separating same to erase the label. As well as being elastically mounted as described, the top sheet 4 and upper sheet 3 may also be slightly elastic. As will be apparent, the top sheet could be omitted and the upper sheet directly elastically mounted as described.

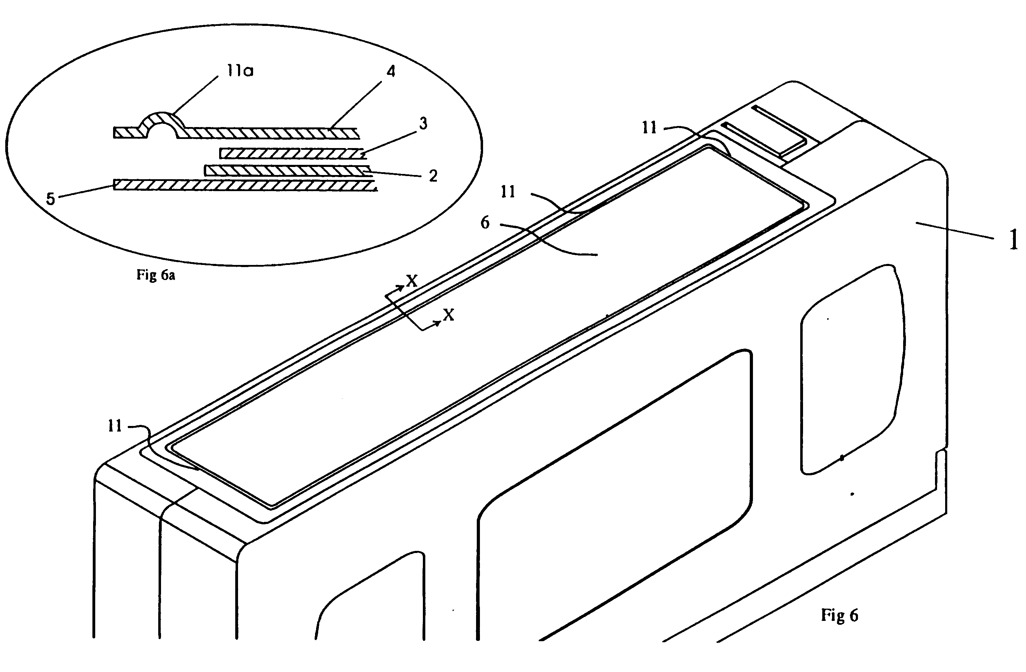

Fig. 6 shows a preferred form of label which is somewhat similar to that of Fig. 5 in that the top sheet is mounted by way of one or more pleats. The label comprises a base layer 2, a top sheet 4, and a upper sheet 3, and a backing sheet 5 with adhesive rear surface. In this label a single pleat 11 extends lengthwise along the long sides of the label on either side, and a similar single pleat 11 extends lengthwise of the short ends of the label, so that all of these pleats encircle the window 6 of the label. Fig. 6A shows a cross-section through a part of one side of the label along line X-X of Fig. 6 showing the pleat extending along this side of the label in cross-section, at 11a in Fig. 6. The label is written on as before and the arrangement is again such that wiping movement of a users finger or thumb over the top surface of the label will cause the top sheet 3 and upper sheet 3 to be dragged/wrinkled to move to separate the upper sheet 3 from the base layer, to erase the label.

In both the Fig. 5 and 6 forms of labels and other similar forms the upper sheet 3 and top sheet 4 may be secured to the backing sheet 5 through pleated or similar mounting along the two longer sides only, of the label as referred to previously.

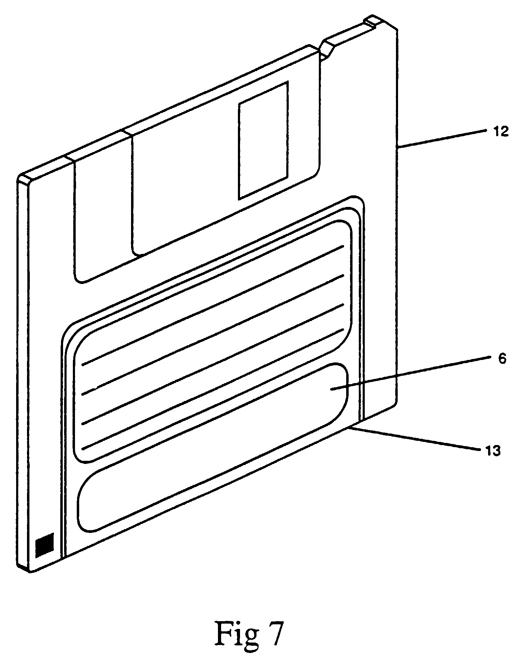

Fig. 7 shows a label of the invention applied to a 3 1/2" computer floppy disc. The disc is indicated at 12 and the label is located in the slightly recessed region provided on the body of the disc for labelling. On the upper sheet 3 of the label separate from the label window 6 is printed a region 7 for permanent marking on the label with a pen for example, while the label of the invention may be used for temporary labelling through the window 6. Alternatively the erasable part of the label could be larger. with the window, or a number of windows arranged like "lines" for example, occupying the major portion of the area. Desirably the label is so formed that the label wraps around the edge of the disc and is adhered to the label recess on the other side of the disc, as indicated at 13. The label may be written on and then erased by wiping a users finger or thumb widthways relative to the disc across the window 6 of the label. During gripping of the disc to insert or withdraw it from a computer disc drive, transverse pressure across the length of the label will not erase the label.

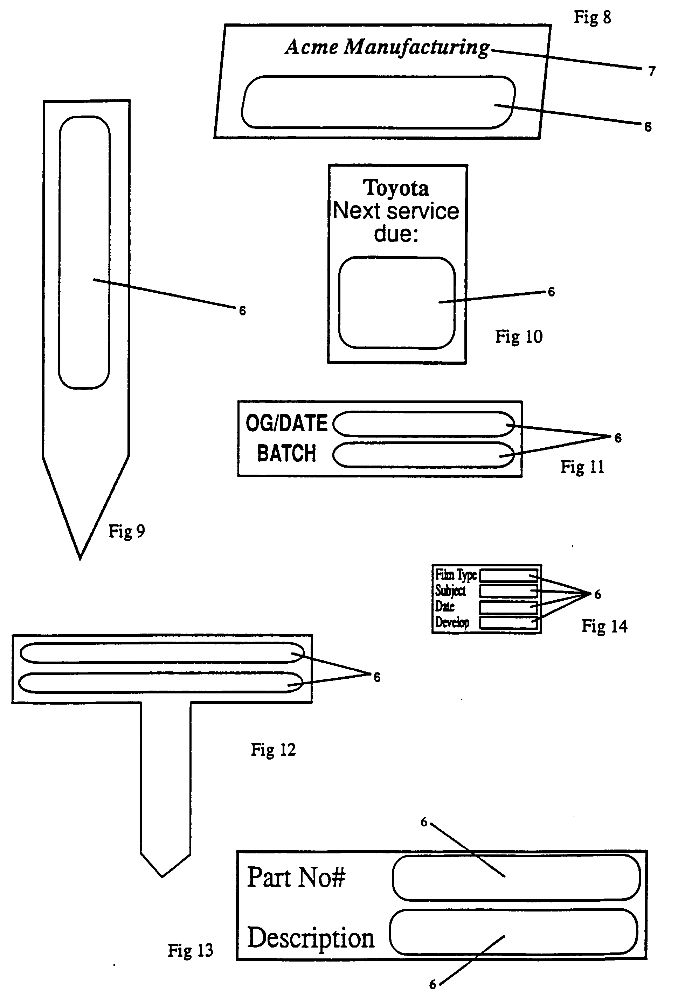

Figs 8 to 18 show other examples of application of the label of the invention. Fig. 8 shows a security visitor badge comprising a label of the invention, having an area 7 for carrying a corporate name or logo and a label window 6 through which the label system may be written on and erased. The badge may have a clip or pin on its rear for affixing to clothing, for example.

Fig. 9 shows a garden plant identification stake which may comprise a length of stiffer plastic material having a spiked end as shown having a window 6 through which the label of the invention may be written on and erased.

Figs 10, 11, 12, 13 and 14 show respectively a vehicle machinery service label and a home brew batch label, both having adhesive rear surfaces enabling the labels to be affixed to the object to be labelled in use, a produce label having a stake like portion for holding the tag upright, a part bin label and an exposed film label also having adhesive rear surfaces, all comprising windows 6 through which the label system of the invention may be written on and erased.

In any form of label of the invention the backing sheet if employed to carry the base layer may be formed of a resiliently flexible material such as light plastic card for example, to stiffen the label.

While the preferred forms of label of the invention described with reference to the drawings have an adhesive rear surface, it is possible that the label could be integrally formed onto the back of a video cassette, computer disc, or surface of another item or object to be labelled. For example, in the case of a video cassette the base layer could be applied directly to the body of the video cassette and the upper layer, and top layer if employed, are fixed to the body of the video cassette over the base layer by adhesion or by plastic welding or the like about the edges of the label.

The label is most preferably formed as a sealed unit thereby preventing the ingress of contaminates and improving mechanical robustness and structural integrity of the label. Also, the wiping action employed in use assists in redistributing the wax or other material of the base layer into any cavities formed by localised pressure during writing thus extending the life of the label.

The label may incorporate a hologram for decorative purposes.

The base layer of the label may be formed of a temperature or moisture sensitive material which will change colour above or below a certain temperature or humidity level to indicate to a user that a computer disc, for example, should not be used. Alternatively a section of such material could be formed in a window elsewhere on the body of the label.

The label of the invention may be used particularly to label video cassettes and can be erased and rewritten many times. The label of the invention answers the need for a video cassette label which can be repeatedly rewritten and erased. The label may be manufactured in bulk cheaply in continuous strips of side by side labels for example. The case of the video cassette does not need to be modified in any way to accommodate the label. The label does not interfere with the video player/recorder mechanism.

The following examples further illustrate the invention.

### Example 1

Label were made up as follows. To the top surface of a commercially available paper having a contact adhesive coating on its rear surface, was applied a thin coating of wax. The wax consisted of a blend about 75% by weight of a microcrystalline MOBILWAX CERESE and about 25% of a fully refined paraffin wax with a melting point of about 135°F. The blended wax was allowed to set. The wax was applied by wiping a block of the wax over the paper surface. This deposited a film of wax on the top surface of the paper, believed to be of about 10 microns thickness. An upper layer consisting a film of polyvinyl chloride of 40 microns thickness was placed over the wax. The label was of dimensions 148 mm x 20 mm and in peripheral regions the PVC upper layer was glued about the entire periphery of the label with a thin beading of glue. In some labels the PVC top layer was applied by hand so as to be relaxed with a slight visible wrinkle. In others the PVC top layer was applied by hand so as to be relaxed, but without a discrete wrinkle being clearly visible to the eye. The labels were tested repeatedly and were all found to operate satisfactorily.

### Example 2

The labels were prepared as described in Example 1, except PVC of a thickness of 85 microns was used for the upper sheet. This material was found to still adhere to the base layer but did not provide quite as good definition of the information written on the label as for the label of Example 1. The written information was however clearly readable and the labels erasable.

### Example 3

Labels were prepared as described in Example 1, but using a top layer of a polyester of 40 microns thickness. The polyester material was found to also adhere well to the wax base layer and to erase easily with a gentle wiping motion of a finger. The polyester material had a slightly greater resilience to marking by the writing implement than PVC, and was more resistant to permanent marking with repeated use.

### Example 4

Labels were made up as in Example 1, but employing a small amount of fluorescent colouring agent blended in with the wax composition before application.

### Example 5

A label was made as described in Example 1 except that the upper layer was made of MYLAR acetate, and the base layer consisted solely of paraffin wax. The paraffin wax was applied to the backing paper in the same way as described in Example 1. A small rib of approximately 1 mm diameter was introduced into the label between the base layer and the upper sheet during manufacture, as shown in Fig 4, to trap a small amount of air and provide a wrinkle during use. The label was tested and found to perform satisfactorily.

The label of the invention have been described with particular reference to the labelling of video cassettes but it will be apparent that the label can also be used for labelling other objects and items such as the spines of folders, and in any application where rewritable labelling is desired.

The foregoing describes the label of the invention and preferred forms thereof. Alterations and modifications and combinations of features not specifically described as will be obvious to those skilled in the art are intended to be incorporated within the scope hereof as defined in the accompanying claims.

## Claims

1. An erasable and rewritable label, comprising a base layer of contrasting colour and an upper sheet over the base layer and providing a smooth top surface to the label, which upper sheet and base layer are sufficiently releasably adhesive together under pressure applied to the label by a writing implement on the upper sheet to cause the upper sheet and the base layer to adhere in a localised region of said pressure so that the colour of the base layer is visible through the upper sheet in said localised region in contrast to the balance of the upper sheet, and to cause the upper sheet to move relative to the base layer to erase the label when a users finger or thumb is wiped across the top surface of the upper sheet from one side to the other side thereof.

2. A label as claimed in claim 1, wherein the upper sheet comprises at least one wrinkle in the upper sheet introduced during manufacture whereby the upper sheet may be moved relative to the base layer by moving the wrinkle along the upper sheet by wiping a users finger or thumb over the top surface of the upper sheet.

3. A label as claimed in claim 1, wherein the upper sheet is mounted to the base layer whereby the upper sheet may be moved relative to the base layer by creating and then moving a wrinkle along the upper sheet by wiping a users finger or thumb over the top surface of the upper sheet.

4. A label as claimed in claim 1, wherein the upper sheet is mounted relative to the base layer such that the upper sheet may be moved elastically relative to the base layer by wiping a users finger or thumb over the top surface of the upper sheet.

5. A label as claimed in claim 4, wherein the upper sheet is formed of a material having sufficient elasticity such that the upper sheet may be moved by stretching relative to the base layer to separate the upper sheet from the base layer by wiping a users finger or thumb over the top surface of the upper sheet.

6. A label as claimed in any one of claims 1 to 5, wherein the base layer and upper sheet over the base layer are longer than they are wide, and the upper sheet is secured to the base layer only along opposite longer sides of the base layer.

7. A label as claimed in claimed 6, wherein the base layer and upper sheet over the base layer are longer than they are wide, and the width of the label is such that the full width of the label may be erased by a single pass of a users finger or thumb over the top surface of the upper sheet.

8. A label as claimed in any one of claims 1 to 7, wherein the base layer is visible through a window in the upper sheet and the upper sheet comprises a region other than said window for carrying printed media.

9. A label as claimed in any one of claims 1 to 8, wherein the underside of the base layer is coated with a contact adhesive.

10. A label as claimed in any one of claims 1 to 9, wherein the label is a video cassette label.

11. A label as claimed in any one of claims 1 to 9, wherein the label is a computer disc label.

## Patentansprüche

1. Löschbares und wiederbeschreibbares Etikett, das eine Basisschicht einer Kontrastfarbe und ein oberes Blatt auf der Basisschicht umfaßt und das Etikett mit einer glatten Oberfläche versieht, wobei das obere Blatt und die Basisschicht unter Druck ausreichend lösbar aneinander haftend sind, der auf das Etikett durch ein Schreibgerät auf das obere Blatt aufgebracht wird, um das obere Blatt und die Basisschicht in einem lokalisierten Bereich des Druckes aneinander zu haften, derart, daß die Farbe der Basisschicht durch das obere Blatt in dem lokalisierten Bereich im Kontrast zu dem Gleichgewicht des oberen Blattes sichtbar wird, und um das obere Blatt zu veranlassen, sich relativ zu der Basisschicht zu bewegen, um das Etikett zu löschen, wenn ein Finger oder Daumen von einem Benutzer über die Oberfläche des oberen Blattes von dessen einen Seite zu der anderen Seite gewischt wird.

2. Etikett nach Anspruch 1, bei welchem das obere Blatt wenigstens eine Falte in dem oberen Blatt umfaßt, die während der Herstellung eingebracht ist, wobei das obere Blatt relativ zu der Basisschicht bewegt werden kann, indem die Falte längs des oberen Blattes durch Wischen eines Fingers oder Daumens von einem Benutzer über die Oberfläche des oberen Blattes bewegt wird.

3. Etikett nach Anspruch 1, bei welchem das obere Blatt an der Basisschicht angebracht ist, wobei das obere Blatt relativ zu der Basisschicht bewegt werden kann, indem eine Falte erzeugt und dann längs des oberen Blattes durch Wischen eines Fingers oder Daumens von einem Benutzer über der Oberfläche des oberen Blattes bewegt wird.

4. Etikett nach Anspruch 1, bei welchem das obere Blatt relativ zu der Basisschicht angebracht ist, derart, daß das obere Blatt relativ zu der Basisschicht durch Wischen eines Fingers oder Daumens von einem Benutzer über die Oberfläche des oberen Blattes elastisch bewegt werden kann.

5. Etikett nach Anspruch 4, bei welchem das obere Blatt aus einem Material gebildet ist, das eine ausreichende Elastizität aufweist, derart, daß das obere Blatt durch Dehnen relativ zu der Basisschicht bewegt werden kann, um das obere Blatt von der Basisschicht durch Wischen eines Fingers oder Daumens von einem Benutzer über die Fläche des Etiketts zu trennen.

6. Etikett nach einem der Ansprüche 1 bis 5, bei welchem die Basisschicht und das obere Blatt auf der Basisschicht länger als breit sind und das obere Blatt an der Basisschicht nur längs gegenüberliegender längerer Seiten der Basisschicht befestigt ist.

7. Etikett nach Anspruch 6, bei welchem die Basisschicht und das obere Blatt auf der Basisschicht länger als breit sind und die Breite des Etiketts derart ausgebildet ist, daß die vollständige Breite des Etiketts durch einen einzigen Durchgang eines Fingers oder Daumens von einem Benutzer über die Oberfläche des oberen Blattes gelöscht werden kann.

8. Etikett nach einem der Ansprüche 1 bis 7, bei welchem die Basisschicht durch ein Fenster in dem oberen Blatt sichtbar ist und das obere Blatt einen anderen Bereich als das Fenster zum Tragen von gedruckten Medien umfaßt.

9. Etikett nach einem der Ansprüche 1 bis 8, bei welchem die Unterseite der Basisschicht mit einem Kontaktkleber überzogen ist.

10. Etikett nach einem der Ansprüche 1 bis 9, bei welchem das Etikett ein Video-Kassetten-Etikett ist.

11. Etikett nach einem der Ansprüche 1 bis 9, bei welchem das Etikett ein Computer-Disc-Etikett ist.

## Revendications

1. Etiquette effaçable et sur laquelle on peut réécrire, comprenant une couche de base de couleur contrastée et une feuille supérieure sur la couche de base et déterminant une surface de dessus lisse pour l'étiquette, lesdites feuille supérieure et couche de base étant suffisamment adhérentes entre elles, mais de façon séparable, sous une pression exercée sur l'étiquette par un instrument d'écriture sur la feuille supérieure pour amener la feuille supérieure et la couche de base à adhérer dans une région localisée de ladite pression de sorte que la couleur de la couche de base soit visible à travers la feuille supérieure dans ladite région localisée en contraste avec le reste de la feuille supérieure, et pour amener la feuille supérieure à se déplacer par rapport à la couche de base pour effacer l'étiquette lorsque le pouce ou doigt de l'utilisateur balaye la surface de dessus de la feuille supérieure d'un bord à l'autre.

2. Une étiquette selon la revendication 1, dans laquelle la feuille supérieure comprend au moins un pli dans la feuille supérieure établi pendant la fabrication de sorte que la feuille supérieure puisse être déplacée par rapport à la couche de base en déplaçant le pli le long de la feuille supérieure par balayage du pouce ou doigt de l'utilisateur sur la surface de dessus de la feuille supérieure.

3. Une étiquette selon la revendication 1, dans laquelle la feuille supérieure est montée sur la couche de base de sorte que la feuille supérieure peut être déplacée par rapport à la couche de base en créant puis déplaçant un pli le long de la feuille supérieure par balayage du pouce ou doigt de l'utilisateur sur la surface de dessus de la feuille supérieure.

4. Une étiquette selon la revendication 1, dans laquelle la feuille supérieure est montée par rapport à la couche de base de façon que la feuille supérieure puisse être déplacée élastiquement par rapport à la couche de base par balayage d'un pouce ou doigt de l'utilisateur sur la surface de dessus de la feuille supérieure.

5. Une étiquette selon la revendication 4, dans laquelle la feuille supérieure est formée d'un matériau possédant une élasticité suffisante telle que la feuille supérieure puisse être déplacée par étirement par rapport à la couche de base pour séparer la feuille supérieure de la couche de base par balayage du pouce ou doigt de l'utilisateur sur la surface de dessus de la couche supérieure.

6. Une étiquette selon l'une quelconque des revendications 1 à 5, dans laquelle la couche de base et la feuille supérieure sur la couche de base sont plus longues que larges, et la feuille supérieure est fixée sur la couche de base uniquement le long des bords opposés les plus longs de la couche de base.

7. Une étiquette selon la revendication 6, dans laquelle la couche de base et la feuille supérieure sur la couche de base sont plus longues que larges, et la largeur de l'étiquette est telle que la totalité de la largeur de l'étiquette peut être effacée par un passage unique d'un pouce ou doigt d'utilisateur sur la surface de dessus de la feuille supérieure.

8. Une étiquette selon l'une quelconque des revendications 1 à 7, dans laquelle la couche de base est visible à travers une fenêtre dans la feuille supérieure et la feuille supérieure comprend une région autre que ladite fenêtre pour porter un moyen de communication imprimé.

9. Une étiquette selon l'une quelconque des revendications 1 à 8, dans laquelle la face inférieure de la couche de base est revêtue d'un adhésif de contact.

10. Une étiquette selon l'une quelconque des revendications 1 à 9, consistant en une étiquette de cassette vidéo.

11. Une étiquette selon l'une quelconque des revendications 1 à 9, consistant en une étiquette de disque informatique.
